# EUROPEAN PATENT SPECIFICATION

(11) **EP 1 342 770 B1**
(45) Date of publication and mention of the grant of the patent: **31.05.2006**
(21) Application number: 03004819.3
(22) Date of filing: 04.03.2003
(51) Int. Cl.: C09K 19/32, C09K 19/38

(54) **Polymerizable liquid crystal compound, liquid crystal polymer and applications thereof**
Polymerisierbare Flüssigkristallverbindung, Flüssigkristallpolymer und deren Anwendungen
Composé liquide cristallin polymérisable, polymère liquide cristallin et leurs applications

(30) Priority: 04.03.2002 JP 2002057857
(43) Date of publication of application: 10.09.2003
(73) Proprietor: FUJI PHOTO FILM CO., LTD., Minami-Ashigara-shi, Kanagawa-ken (JP)
(72) Inventor: Nishikawa, Naoyuki, Minami-Asigara-shi, Kanagawa-ken (JP); Nishio, Ryo, Minami-Asigara-shi, Kanagawa-ken (JP)
(74) Representative: Grünecker, Kinkeldey, Stockmair & Schwanhäusser Anwaltssozietät

(56) References cited:
- EP-A- 0 261 712
- EP-A- 0 826 659
- WO-A-93/22397
- US-A- 4 386 007
- PATENT ABSTRACTS OF JAPAN vol. 2000, no. 02, 29 February 2000 (2000-02-29) -& JP 11 322690 A (AGENCY OF IND SCIENCE &TECHNOL; FUKUDA TAKASHI; MATSUDA HIROO), 24 November 1999 (1999-11-24)
- PATENT ABSTRACTS OF JAPAN vol. 018, no. 656 (C-1286), 13 December 1994 (1994-12-13) -& JP 06 256284 A (TAKEDA CHEM IND LTD;OTHERS: 01), 13 September 1994 (1994-09-13)
- PATENT ABSTRACTS OF JAPAN vol. 1995, no. 08, 29 September 1995 (1995-09-29) -& JP 07 138197 A (TAKEDA CHEM IND LTD;OTHERS: 01), 30 May 1995 (1995-05-30)
- PATENT ABSTRACTS OF JAPAN vol. 009, no. 012 (C-261), 18 January 1985 (1985-01-18) -& JP 59 163358 A (TOUKIYOU OUKA KOGYO KK;OTHERS: 01), 14 September 1984 (1984-09-14)
- PATENT ABSTRACTS OF JAPAN vol. 2000, no. 16, 8 May 2001 (2001-05-08) -& JP 2001 011024 A (MITSUBISHI GAS CHEM CO INC), 16 January 2001 (2001-01-16)

## Description

### FIELD OF THE INVENTION

The present invention relates to a polymerizable liquid crystal compound usable as a photoelectric functional material, a liquid crystal polymer, and an optical retardation film, an optically anisotropic substance (an optically anisotropic element), a nonlinear optical device and an electro-optical device using the liquid crystal polymer.

### BACKGROUND OF THE INVENTION

Because liquid crystal compounds with polymerizable groups can be easily converted to optically anisotropic materials by polymerizing them in a liquid crystal state, they are used for optical devices such as optical compensating plates (retardation plates) of liquid crystal displays and optical elements of optical heads. For example, the liquid crystal compounds have been used for optical compensating plates of STN liquid crystal displays (EP 0,423,881, etc.), polarizing beam splitters (EP 0,428,213, etc.), etc. The liquid crystal compounds suitable for the optical devices are disclosed in EP 0,261,712, EP 0,331,233, EP 0,405,713, WO 93/22397, etc. Conventional, polymerizable liquid crystal compounds, however, often exhibit low anisotropy in refractive index or unconformable wavelength dispersion properties depending on how they are used. Thus, the development of a polymerizable liquid crystal compound with improved anisotropy in a refractive index and wavelength dispersion properties has been expected.

Polymerizable liquid crystal compounds having nonlinear optical properties are usable as organic, nonlinear optical materials. For example, JP 11-322690 A discloses a compound represented by the formula (III): 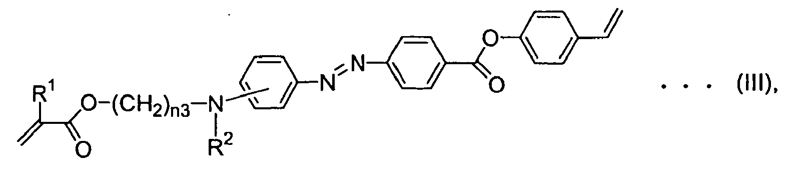 wherein R¹ represents a hydrogen atom or a methyl group, R² represents a lower alkyl group, and n₃ represents an integer of 4 or more. However, the compound exhibits a narrow transparent region and is easily cis-trans-isomerized by ultraviolet radiation because of the azo bond. Therefore, improvement is desired.

Disclosed in JP 59-163358 A is a compound with a hydroxynaphthalene skeleton, which is represented by the formula (IV): 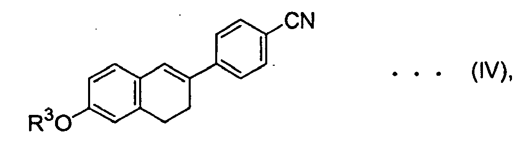 wherein R³ represents a substituted or unsubstituted alkyl group or acyl group. Though this compound is a liquid crystal compound, it is poor in stability because it has no polymerizable group. Further, disclosed in JP 8-73486 A is a phosphate compound represented by the formula (V): 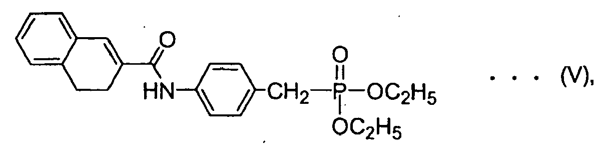 However, this compound is not a polymerizable liquid crystal compound.

### OBJECT OF THE INVENTION

Accordingly, an object of the present invention is to provide a polymerizable liquid crystal compound having excellent anisotropy in a refractive index and a wide transparent region, which is resistant to cis-trans-isomerization by ultraviolet radiation, and a liquid crystal polymer prepared by the polymerization of the above polymerizable liquid crystal compound.

Another object of the present invention is to provide an optical retardation film and an optically anisotropic substance (an optically anisotropic element) having large anisotropy in a refractive index.

A further object of the present invention is to provide a nonlinear optical device and an electro-optical device having a wide transparent region, which are resistant to cis-trans-isomerization by light.

### SUMMARY OF THE INVENTION

As a result of intensive research in view of the above objects, the inventors have found that a novel, polymerizable liquid crystal compound with a particular structure is suitably usable as a photoelectric functional material applicable for an optical retardation film and an optically anisotropic substance with large anisotropy in a refractive index, and a nonlinear optical device and an electro-optical device with stability and a wide transparent region. The present invention has been completed based on this finding.

Thus, a polymerizable liquid crystal compound of the present invention is represented by the formula (I): 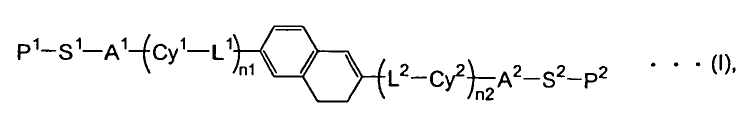 wherein P¹ and P² independently represent a polymerizable group; A¹, A², L¹ and L² independently represent a divalent linking group of constituted by a single bond, an oxygen atom, a sulfur atom, a carbonyl group, a sulfonyl group, a substituted or unsubstituted imino group, or a combination thereof; S¹ and S² independently represent a divalent linking group; Cy¹ and Cy² independently represent a cyclic group having 5 to 14 carbon atoms; and each of n₁ and n₂ represents an integer, the sum of n₁ and n₂ being 0 to 2.

The polymerizable liquid crystal compound is preferably represented by the formula (II): 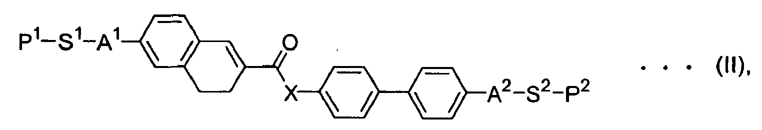 wherein P¹ and P² independently represent a polymerizable group; A¹ and A² independently represent a divalent linking group constituted by a single bond, an oxygen atom, a sulfur atom, a carbonyl group, a sulfonyl group, a substituted or unsubstituted imino group, or a combination thereof; S¹ and S² independently represent a divalent linking group; and X represents an oxygen atom, a sulfur atom, or a substituted or unsubstituted imino group.

The polymerizable liquid crystal compound represented by the formula (I) or (II) exhibits particularly excellent photoelectric functions (1) when at least one of P¹ and P² is an acryloyloxy group or a methacryloyloxy group, and/or (2) when one of A¹ and A² is an oxygen atom, a sulfur atom, or a substituted or unsubstituted imino group, the other being a carbonyloxy group or a sulfonyloxy group.

### DETAILED DESCRIPTION OF THE PREFERRED EMBODIMENTS

### [1] Polymerizable liquid crystal compound

The polymerizable liquid crystal compound of the present invention is represented by the formula (I):

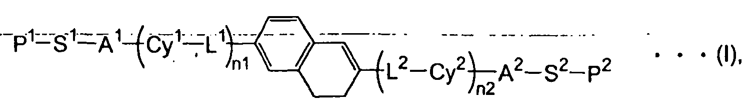

In the formula (I), P¹ and P² independently represent a polymerizable group. Examples of the polymerizable group include an acryloyloxy group, a methacryloyloxy group, a glycidyl group, a vinyloxy group, etc. At least one of P¹ and P² is preferably an acryloyloxy group or a methacryloyloxy group, and it is more preferred that both of P¹ and P² are an acryloyloxy group or a methacryloyloxy group.

A¹, A², L¹ and L² independently represent a divalent linking group constituted by a single bond, an oxygen atom, a sulfur atom, a carbonyl group, a sulfonyl group, a substituted or unsubstituted imino group, or a combination thereof. A¹ and A² are preferably an oxygen atom, a sulfur atom, a carbonyloxy group (-COO-), an oxycarbonyl group (-OCO-), a sulfonyloxy group or a substituted or unsubstituted imino group, respectively. It is more preferable that one of A¹ and A² is an oxygen atom, a sulfur atom, or a substituted or unsubstituted imino group, while the other is a carbonyloxy group (-COO-) or a sulfonyloxy group. Each of L¹ and L² is preferably a single bond, a carbonyloxy group (-COO-), an oxycarbonyl group (-OCO-), a carbonylimino group (-CONH-) or an iminocarbonyl group (-NHCO-), more preferably a single bond, a carbonyloxy group (-COO-) or an oxycarbonyl group (-OCO-). In the case of using the polymerizable liquid crystal compound of the present invention for a nonlinear optical device or an electro-optical device, each of L¹ and L² is preferably a single bond or a carbonyloxy group.

S¹ and S² independently represent a divalent linking group. S¹ and S² may have a heteroatom, a cyclic structure and/or a substituent. Preferred examples of the substituent include lower alkyl groups, halogen atoms, etc. In a case where the carbon atom bonding to the substituent is an asymmetric carbon atom, the configuration may be any of R, S and RS. Each of S¹ and S² is preferably a divalent linking group having 2 to 14 carbon atoms, more preferably an alkylene group having 2 to 10 carbon atoms.

Cy¹ and Cy² independently represent a cyclic group having 5 to 14 carbon atoms. Cy¹ and Cy² may have a monocyclic structure or a polycyclic structure such as a condensed ring and a ring assemblage, and may have a non-aromatic or aromatic ring. Cy¹ and Cy² may have a substituent on the ring, and the substituent is preferably a lower alkyl group having 1 to 6 carbon atoms, a lower alkoxyl group having 1 to 6 carbon atoms or a halogen atom, more preferably a methyl group, a chlorine atom or a bromine atom. Each of Cy¹ and Cy² preferably has a benzene ring or a naphthalene ring, and more preferably has a benzene ring.

Each of n₁ and n₂ represents an integer satisfying the condition that the sum of n₁ and n₂ is 0 to 2. One of n₁ and n₂ is preferably 0. n₁ = 0 and n₂ = 1 or 2 is preferable n₁ = 0 and n₂ = 2 is more preferable. When n₁ or n₂ is 2, a plurality of L^{1,}s, L²'s, Cy¹'s and Cy²'s may be the same or different ones, respectively.

The polymerizable liquid crystal compound of the present invention is preferably represented by the formula (II): 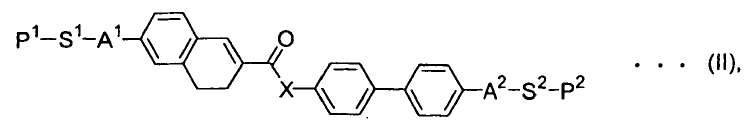 wherein P¹, P², A', A², S' and S² are the same as those in the formula (I); and X represents an oxygen atom, a sulfur atom, or a substituted or unsubstituted imino group. X is preferably an oxygen atom.

Specific examples of the polymerizable liquid crystal compound of the present invention will be illustrated below without intention of restricting the scope of the present invention defined by the claims attached hereto.

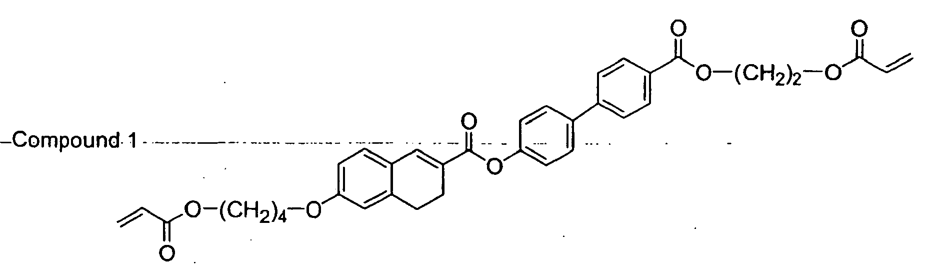

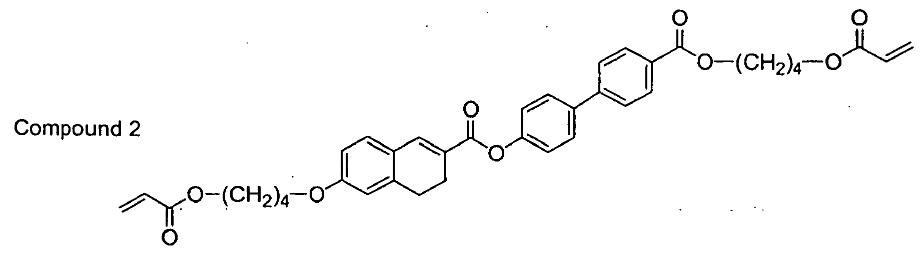

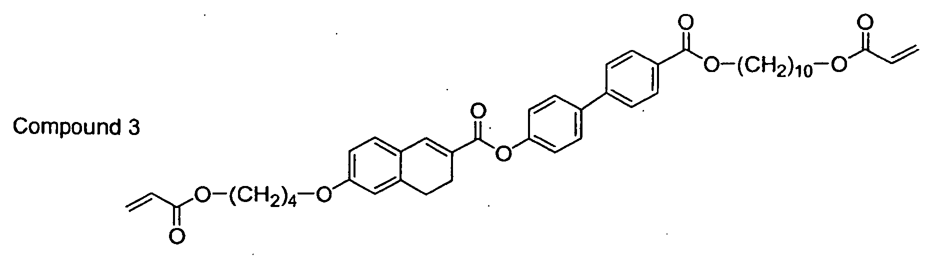

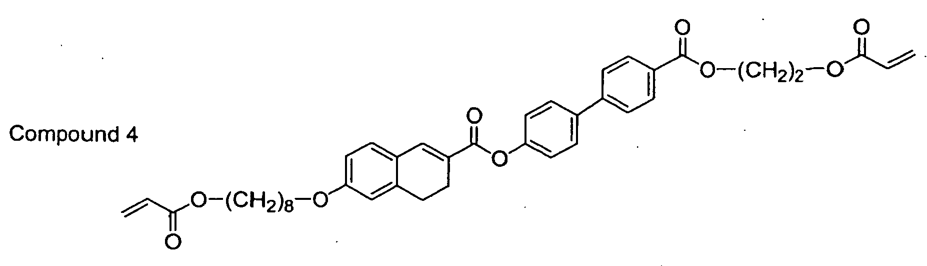

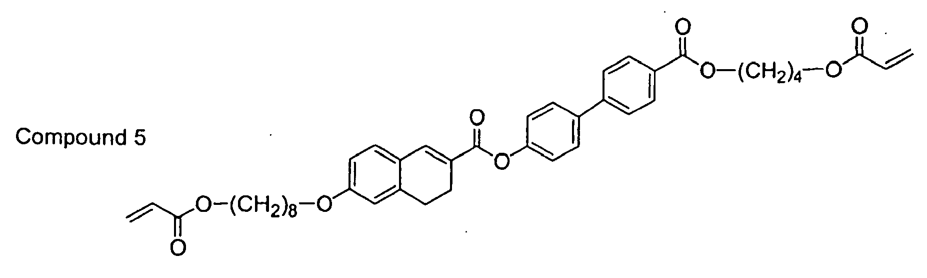

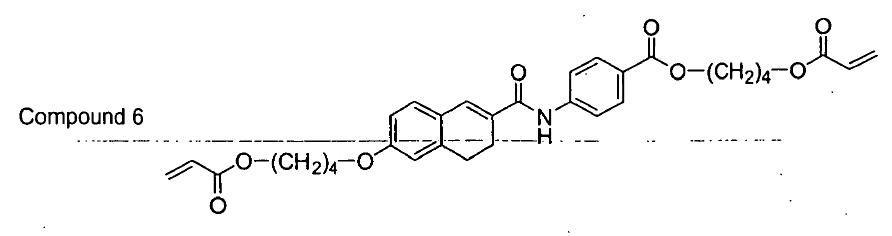

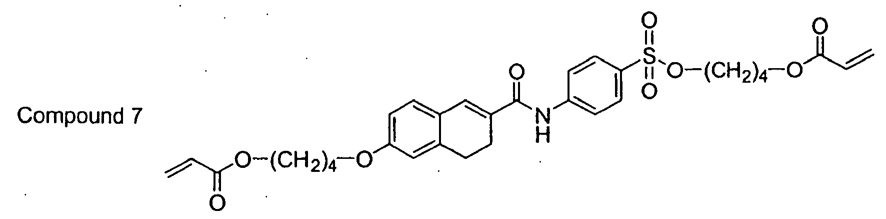

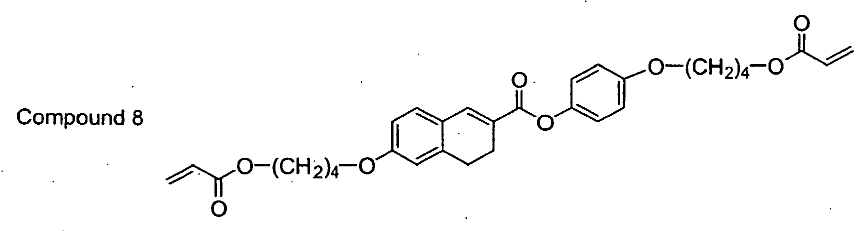

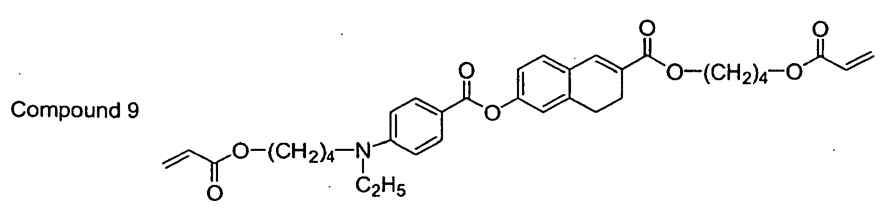

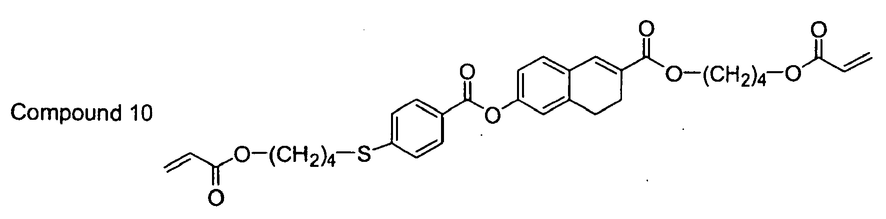

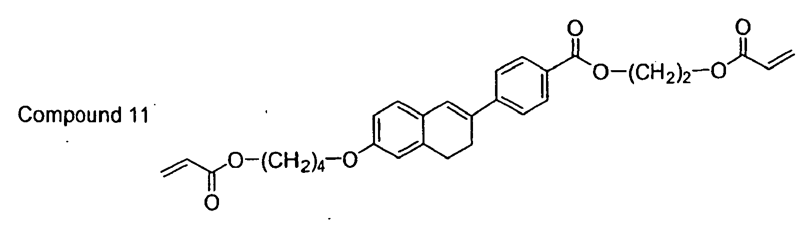

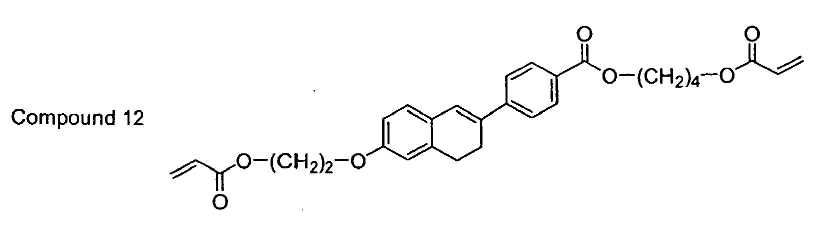

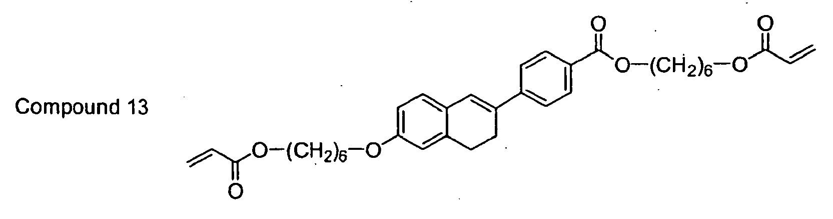

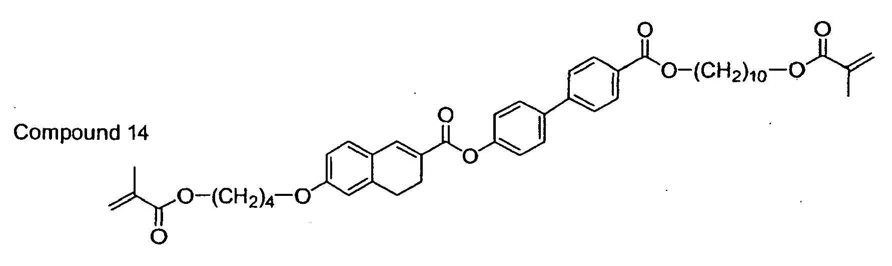

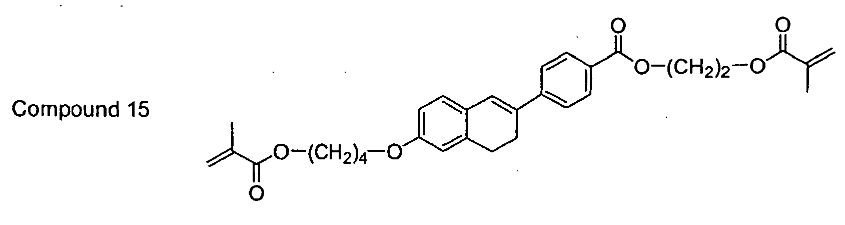

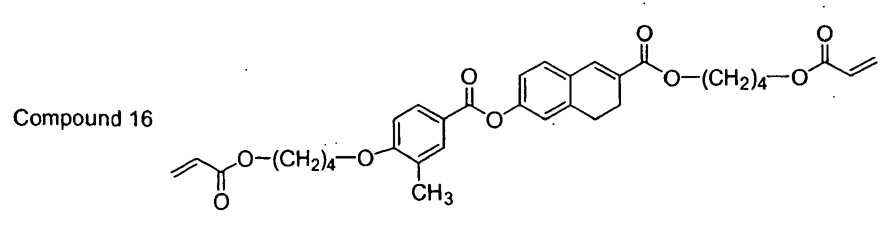

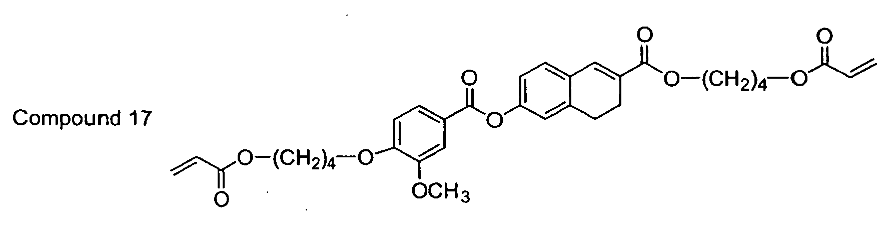

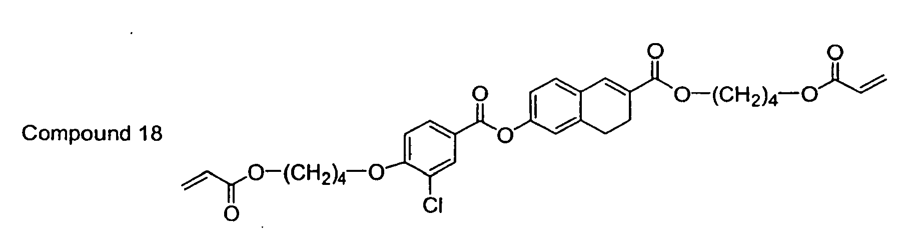

Taking Compounds 1, 9 and 11 for example, a method for synthesizing the polymerizable liquid crystal compound of the present invention will be illustrated below. It should be noted that the other polymerizable liquid crystal compounds of the present invention can also be synthesized by the method described below, though the scope of the present invention is not restricted thereto.

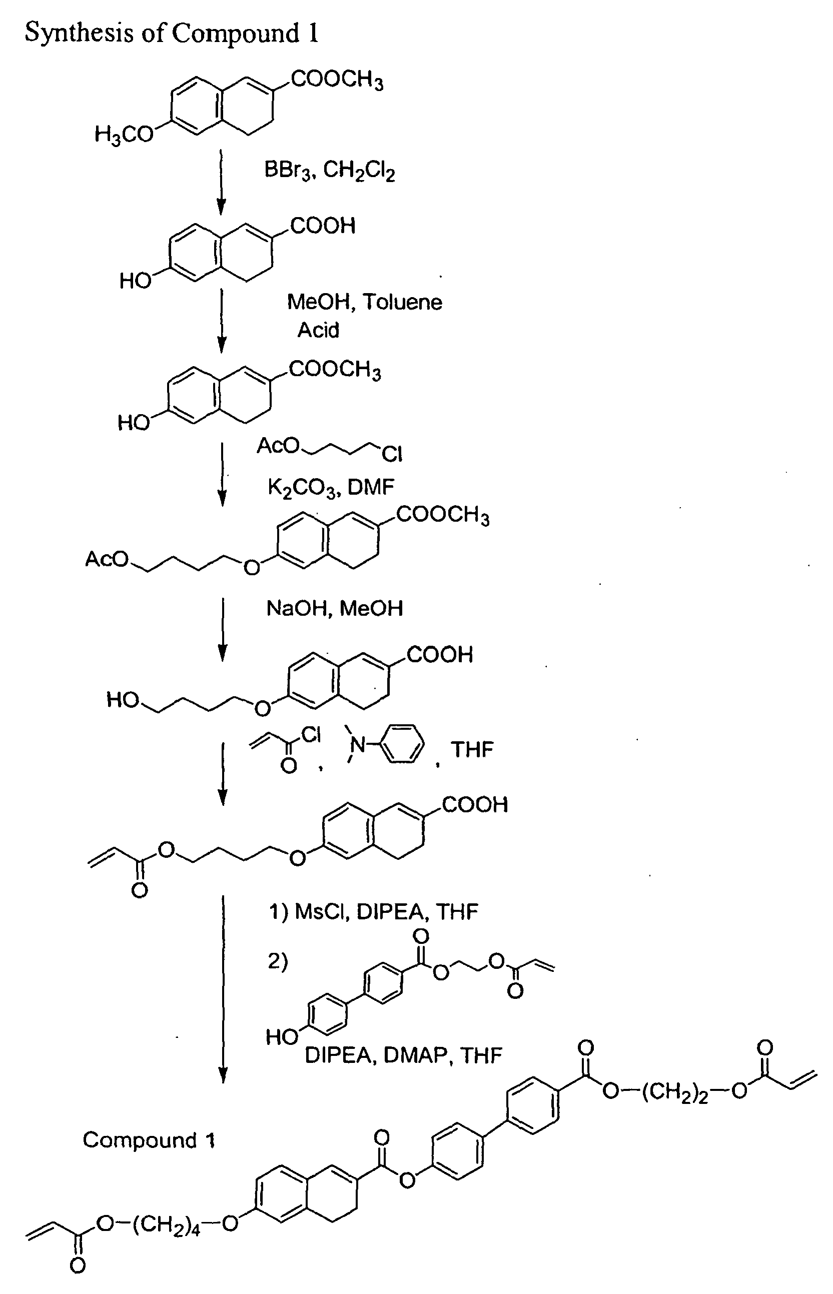

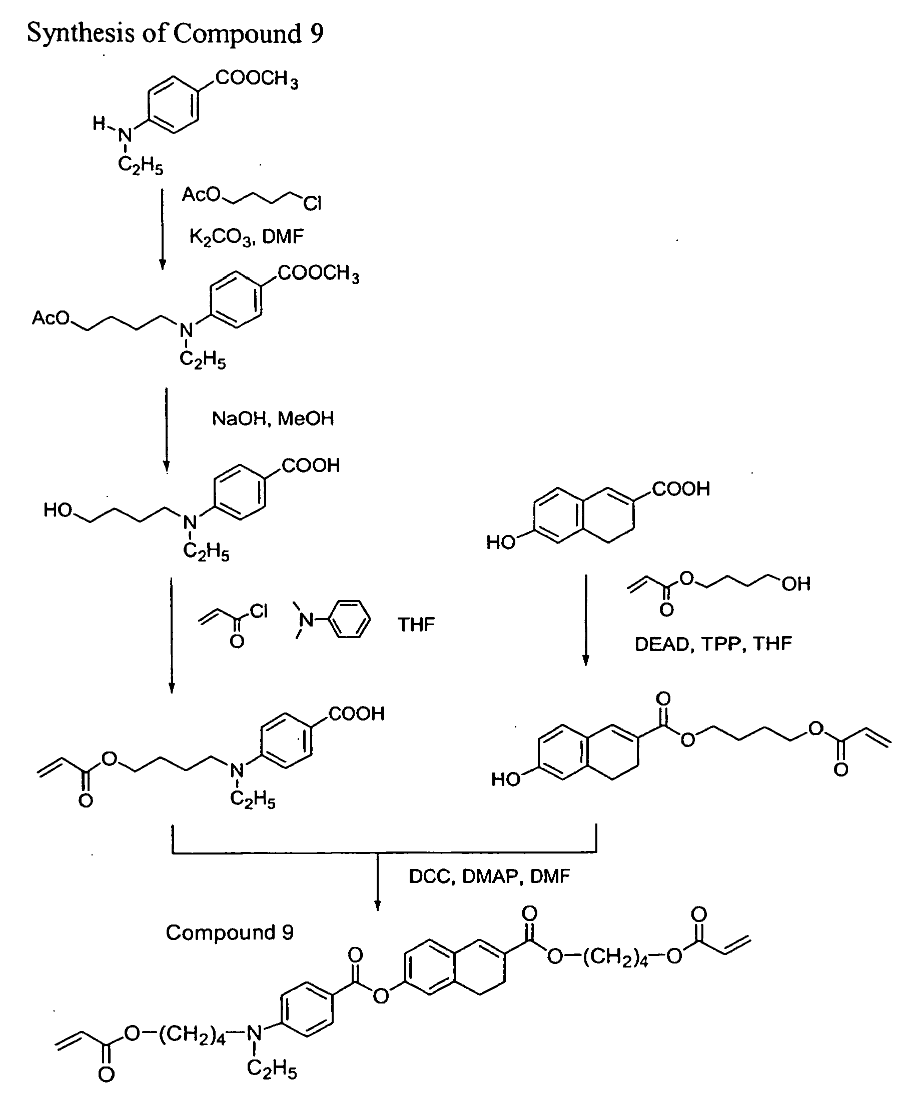

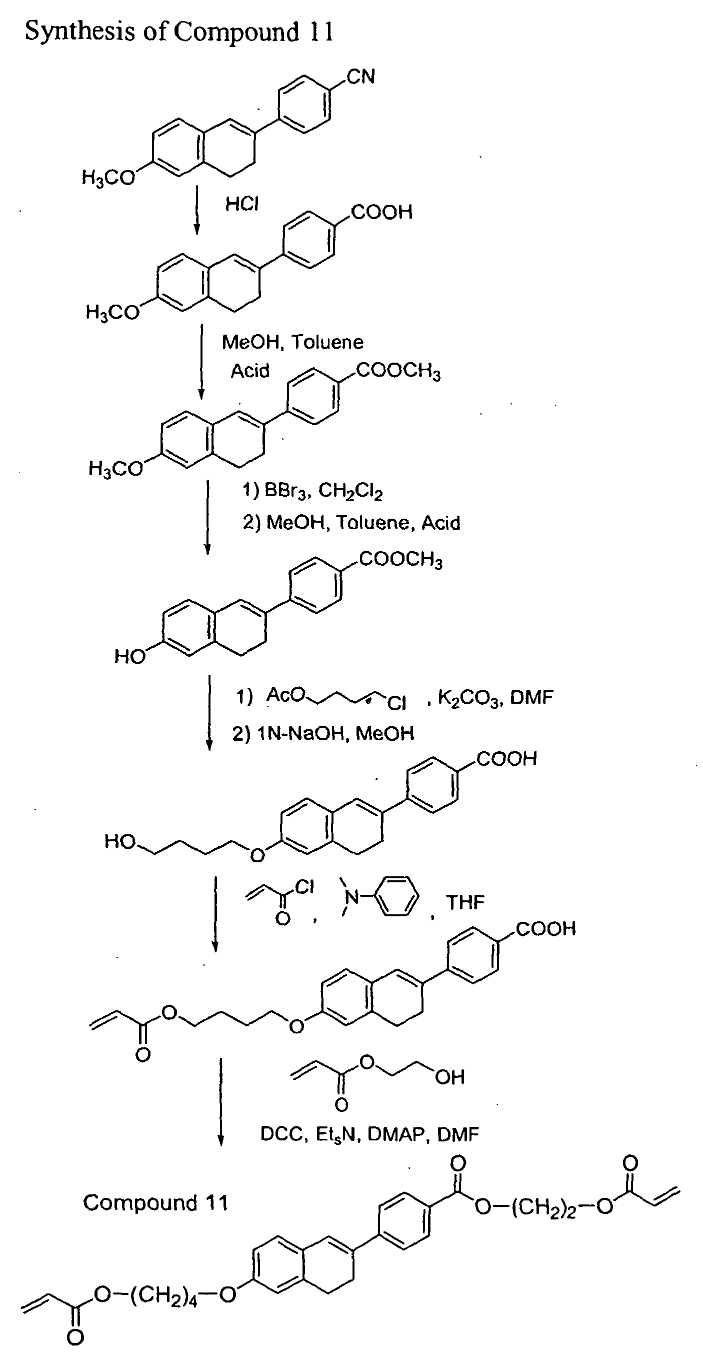

### [2] Liquid crystal polymer

The liquid crystal polymer of the present invention is prepared by polymerizing the above polymerizable liquid crystal compound of the present invention. The liquid crystal polymer can be prepared by a commonly known method, for example, by a method comprising the steps of (a) applying a liquid crystal composition comprising the polymerizable liquid crystal compound to a substrate such as a glass plate, etc., and (b) polymerizing the polymerizable liquid crystal compound in an oriented state.

### (a) Application of liquid crystal composition

Though not particularly limited, the substrates used in the production of the liquid crystal polymer is preferably glass plates, polymer films, reflecting plates, etc. The liquid crystal composition may comprise the polymerizable liquid crystal compound of the present invention, a solvent, and if necessary, an appropriate additive, which may be known, such as a polymerization initiator, a polymerization inhibitor, a photosensitizer, a cross-linking agent, an auxiliary agent for orienting liquid crystal, etc. Though the amounts of the additives added to the liquid crystal composition are not particularly limited, the total weight of the additives is preferably 30% by mass or less, more preferably 15% by mass or less, based on 100% by mass of the entire liquid crystal composition. The solvent is not limited and may be tetrahydrofuran (THF), etc. The liquid crystal composition may be applied to the substrate by a known method, examples of which include a curtain coating method, an extrusion coating method, a roll coating method, a spin coating method, a dip coating method, a bar coating method, a spray coating method, a slide coating method, a printing method, etc.

### (b) Orientation

The orientation of the polymerizable liquid crystal compound may be achieved, for example, by subjecting the above substrate to an orientation treatment beforehand. A preferred example of the orientation treatment of the substrate is a method in which a liquid crystal-orienting layer such as a polyimide orientation film (serves as an alignment film) and a polyvinyl alcohol orientation film (serves as an alignment film) is disposed on the substrate and subjected to rubbing, etc. The orientation of the polymerizable liquid crystal compound can also be achieved by a method in which a magnetic or electric field, etc. is applied to the liquid crystal composition on the substrate. In the case of using the liquid crystal polymer for a nonlinear optical device or an electro-optical device, the polymerizable liquid crystal compound is preferably oriented by applying an electric field. The electric field may be applied to the compound by applying a DC electric field or by using corona discharge, and the corona discharge is preferable.

### (c) Polymerization

The polymerizable liquid crystal compound may be polymerized by a known method utilizing heat or an electromagnetic wave. Preferred among polymerization methods using an electromagnetic wave is a radical polymerization method using a photoinitiator with ultraviolet ray irradiation. It is preferred that the liquid crystal polymer is cross-linked while applying a magnetic field or an electric field. The liquid crystal polymer prepared on the substrate may be used for an optical retardation film, an optically anisotropic substance, a nonlinear optical device, an electro-optical device, etc. without modification, and may be peeled off from the substrate or transferred onto another substrate, if necessary.

### [3] Applications

The liquid crystal polymer of the present invention can be suitably used for an optical retardation film, an optically anisotropic substance, a nonlinear optical device, an electro-optical device, etc. Since these devices themselves are known, their brief explanation will be given below. The optical retardation film and the optically anisotropic substance can be used as a retardation film of liquid crystal displays, an optical compensating plate (retardation plate) of liquid crystal displays, a polarizing beam splitter, etc. The nonlinear optical device and the electro-optical device can be used for waveguide-type light modulation devices, optical switches, etc.

The present invention will be described in more detail below with reference to Examples without intention of restricting the scope of the present invention.

### Example 1

21.8 g of methyl 1,2-dihydro-7-methoxynaphthalene-3-carboxylate synthesized by a method described in Bull. Chem. Soc. Fr., page 512 (1950) was dissolved in 218 mL of dichloromethane, and 218 mL of a boron tribromide-dichloromethane solution (1.68 M) was added to this solution. The resultant solution was stirred at room temperature for 2 hours and poured into cold water, and the resultant precipitate was isolated by suction filtration to obtain 19 g of 1,2-dihydro-7-hydroxynaphthalene-3-carboxylic acid.

1,2-dihydro-7-hydroxynaphthalene-3-carboxylic acid thus obtained was dispersed in 500 mL of toluene, and 30 mL of methanol and 2 g of *p*-toluenesulfonic acid were added thereto. The resultant reaction mixture was then heated and stirred under reflux for 8 hours while removing water generated in the reaction by Dean-Stark. The reaction mixture was washed with water and concentrated under a reduced pressure, and the residue was recrystallized from acetonitrile to obtain 17.2 g of methyl 1,2-dihydro-7-hydroxynaphthalene-3-carboxylate.

3.0 g of methyl 1,2-dihydro-7-hydroxynaphthalene-3-carboxylate thus obtained was dissolved in DMF, and 2.4 g of acetyloxybutyl chloride, 3.5 g of potassium carbonate and 0.15 g of sodium iodide were added thereto. The resultant mixture was heated to 100°C and stirred for 8 hours. The stirred reaction mixture was extracted with ethyl acetate after adding water, and the extract solution was dried with sodium sulfate and concentrated under a reduced pressure. The residue was purified by silica gel chromatography using an eluate of ethyl acetate and hexane (ethyl acetate/hexane = 2/8), to obtain 3.0 g of methyl 1,2-dihydro-7-(4-acetyloxybutyloxy)naphthalene-3-carboxylate.

3.0 g of methyl 1,2-dihydro-7-(4-acetyloxybutyloxy)naphthalene-3-carboxylate thus obtained was dissolved in methanol, and a 1-N sodium hydroxide aqueous solution was added thereto to provide a mixture, which was stirred at 60°C for 5 hours. After adding water to the reaction mixture, it was washed with ethyl acetate, and hydrochloric acid was added thereto until it was rendered acidic, to obtain 2.7 g of 1,2-dihydro-7-(4-hydroxybutyloxy)naphthalene-3-carboxylic acid.

2.7 g of 1,2-dihydro-7-(4-hydroxybutyloxy)naphthalene-3-carboxylic acid thus obtained was dissolved in 50 mL of THF, and 1.6 g of *N,N*-dimethylaniline and 1.03 mL of acryloyl chloride was added thereto. The resultant reaction mixture was stirred at room temperature for 2 days, added to water and extracted with ethyl acetate. The extract solution was dried with sodium sulfate and concentrated under a reduced pressure, and the resultant solid was washed with hexane to obtain 2.4 g of 1,2-dihydro-7-(4-acryloyloxybutoxy)naphthalene-3-carboxylic acid.

1.0 g of mesyl chloride was dissolved in 5 mL of THF, and a mixture of 2.4 g of 1,2-dihydro-7-(4-acryloyloxybutoxy)naphthalene-3-carboxylic acid, 1.0 g of diisopropylethylamine and 5 mL of THF was added thereto dropwise and stirred for 1 hour while cooling with ice. A mixture of 2.36 g of 2-acryloyloxyethyl 4-hydroxybiphenyl-4'-carboxylate, 1.0 g of diisopropylethylamine and 5 mL of THF was then added to the resultant reaction mixture and stirred at room temperature for 8 hours. The reaction mixture was extracted with ethyl acetate after the addition of water, and the resultant organic phase was dried with sodium sulfate and concentrated under a reduced pressure. The residue was purified by silica gel chromatography using an eluate of dichloromethane and ethyl acetate (dichloromethane/ethyl acetate = 95/5), to obtain 1.2 g of Compound 1.

The structure of Compound 1 thus synthesized was confirmed by NMR and MS spectra, and the phase behavior thereof was determined as follows.
¹H-NMR (δ, CDCl₃): 1.8-2.0 (4H, m), 2.72 (2H, m), 2.29 (2H, m), 4.04(2H, t), 4.25 (2H, t), 4.54 (2H, t), 4.59 (2H, t), 5.8-5.9 (2H, m), 6.1-6.2 (2H, m), 6.5-6.5 (2H, m), 6.70 (1H, dd), 6.76 (1H, d), 7.22 (1H, d), 7.29 (2H, d), 7.64 (2H, d), 7.67 (2H, d), 7.76 (1H, s), 8.12 (2H, d).
Fab MASS (M+H)⁺: 611.
Phase behavior: 66.3°C-Sx-93.1°C-Sa-146°C-N-153°C-I (Sx and Sa: smectic phase, N: nematic phase, I: isotropic liquid).

### Example 2

Compound 2 was synthesized in the same manner as in Example 1 except for using 4-acryloyloxybutyl 4-hydroxybiphenyl-4'-carboxylate in place of 2-acryloyloxyethyl 4-hydroxybiphenyl-4'-carboxylate. The structure of the synthesized Compound 2 was confirmed by NMR and MS spectra, and the phase behavior thereof was determined as follows.
¹H-NMR (δ, CDCl₃): 1.6-2.0 (8H, m), 2.72 (2H, m), 2.29 (2H, m), 4.04(2H, t), 4.25 (2H, t), 4.54 (2H, t), 4.59 (2H, t), 5.8-5.9 (2H, m), 6.1-6.2 (2H, m), 6.5-6.5 (2H, m),-6.70 (1H, dd), 6.76 (1H, d), 7.22 (1H, d), 7.29 (2H, d), 7.64 (2H, d), 7.67 (2H, d), 7.76 (1H, s), 8.12 (2H, d).
Fab MASS (M+H)⁺: 639.
Phase behavior: 116°C-Sc-153°C-I (Sc: smectic phase, I: isotropic liquid).

### Example 3

Compound 3 was synthesized in the same manner as in Example 1 except for using 10-acryloyloxydecyl 4-hydroxybiphenyl-4'-carboxylate in place of 2-acryloyloxyethyl 4-hydroxybiphenyl-4'-carboxylate. The structure of the synthesized Compound 3 was confirmed by NMR and MS spectra, and the phase behavior thereof was determined as follows.
¹H-NMR (δ, CDCl₃): 1.3-1.5 (12H, m), 1.67 (2H, m), 1.76 (2H, m), 1.8-2.0 (4H, m), 2.73 (2H, m), 2.90 (2H, m), 4.04(2H, t), 4.15 (2H, t), 4.25 (2H, t), 4.33 (2H, t), 5.8-5.9 (2H, m), 6.1-6.2 (2H, m), 6.5-6.5 (2H, m), 6.70 (1H, dd), 6.76 (1H, d), 7.20 (1H, d), 7.29 (2H, d), 7.64 (2H, d), 7.67 (2H, d), 7.76 (1H, s), 8.13 (2H, d).
Fab MASS (M+H)⁺: 723
Phase behavior: 43.6°C-Sc-75.5°C-Sa-129°C-I (Sc and Sa: smectic phase, I: isotropic liquid).

### Example 4

Compound 4 was synthesized in the same manner as in Example 1 except for using acetyloxyoctyl chloride in place of acetyloxybutyl chloride. The structure of the synthesized Compound 4 was confirmed by NMR and MS spectra, and the phase behavior thereof was determined as follows.
¹H-NMR (δ, CDCl₃): 1.3-1.5 (8H, m), 1.68 (2H, m), 1.80 (2H, m), 2.73 (2H, m), 2.90 (2H, m), 3.99 (2H,t), 4.16 (2H,-t), 4.53 (2H, t), 4.59 (2H, t), 5.8-5.9 (2H, m), 6.1-6.2 (2H, m), 6.5-6.5 (2H, m), 6.70 (1H, dd), 6.76 (1H, d), 7.20 (1H, d), 7.29 (2H, d), 7.64 (2H, d), 7.67 (2H, d), 7.76 (1H, s), 8.13 (2H, d).
Fab MASS (M+H)⁺: 667.
Phase behavior: 37.2°C-Sc-65.7°C-Sa-144.1°C-I (Sc and Sa: smectic phase, I: isotropic liquid).

### Example 5

Compound 5 was synthesized in the same manner as in Example 1 except for using acetyloxyoctyl chloride in place of acetyloxybutyl chloride, and using 4-acryloyloxybutyl 4-hydroxybiphenyl-4'-carboxylate in place of 2-acryloyloxyethyl 4-hydroxybiphenyl-4'-carboxylate. The structure of the synthesized Compound 5 was confirmed by NMR and MS spectra, and the phase behavior thereof was determined as follows.
¹H-NMR (δ, CDCl₃): 1.3-1.5 (8H, m), 1.68 (2H, m), 1.80 (2H, m), 1.8-2.0 (4H, m), 2.73 (2H, m), 2.90 (2H, m), 3.99 (2H, t), 4.16 (2H, t), 4.25 (2H, t), 4.39 (2H, t), 5.8-5.9 (2H, m), 6.1-6.2 (2H, m), 6.5-6.5 (2H, m), 6.70 (1H, dd), 6.76 (1H, d), 7.20 (1H, d), 7.29 (2H, d), 7.64 (2H, d), 7.67 (2H, d), 7.76 (1H, s), 8.13 (2H, d).
Fab MASS (M+H)⁺: 695.
Phase behavior: 39.2°C-Sc-67.3°C-Sa-147.6°C-I (Sc and Sa: smectic phase, I: isotropic liquid).

### Example 6

Compound 6 was synthesized in the same manner as in Example 1 except for using 4-acryloyloxybutyl 4-aminobenzoate in place of 2-acryloyloxyethyl 4-hydroxybiphenyl-4'-carboxylate. The MS spectrum of the synthesized Compound 6 was measured: Fab MASS (M+H)⁺ = 562.

### Example 7

Compound 7 was synthesized in the same manner as in Example 1 except for using 4-acryloyloxybutyl 4-aminobenzenesulfonate in place of 2-acryloyloxyethyl 4-hydroxybiphenyl-4'-carboxylate. The MS spectrum of the synthesized Compound 7 was measured: Fab MASS (M+H)⁺ = 598.

### Example 8

Compound 8 was synthesized in the same manner as in Example 1 except for using 4-acryloyloxybutyloxyphenol in place of 2-acryloyloxyethyl 4-hydroxybiphenyl-4'-carboxylate. The MS spectrum of the synthesized Compound 8 was measured: Fab MASS (M+H)⁺ = 535.

### Example 9

19 g of 1,2-dihydro-7-hydroxynaphthalene-3-carboxylic acid prepared in the same manner as in Example 1 was dissolved in 100 mL of THF, and 20 g of a 40% toluene solution of diethylazodicarboxylate, 30 g of triphenylphosphine and 15 g of 4-hydroxybutyl acrylate were added thereto. The resultant reaction mixture was stirred for 8 hours and concentrated under a reduced pressure. The residue was purified by silica gel chromatography using an eluate of hexane and ethyl acetate (hexane/ethyl acetate = 7/3), to obtain 27 g of 4-acryloyloxybutyl 1,2-dihydro-7-hydroxynaphthalene-3-carboxylate.

18 g of methyl 4-ethylaminobenzoate was dissolved in 100 mL of DMF, and 15 g of acetyloxybutyl chloride, 27 g of potassium carbonate and 2 g of sodium iodide were added thereto to provide a mixture, which was heated to 100°C and stirred for 8 hours. Methanol and a 1N sodium hydroxide aqueous solution were then added to the resultant reaction mixture and further stirred for 2 hours. The water layer of the reaction mixture was washed with ethyl acetate, hydrochloric acid was added thereto, and the resultant precipitate was isolated to obtain 11 g of *N*-ethyl-*N*-(4-hydroxybutyl)-aminobenzoic acid.

2.4 g of *N*-ethyl-*N*-(4-hydroxybutyl)-aminobenzoic acid thus obtained was dissolved in 20 mL of DMF, and 1.2 g of *N,N-*dimethylaniline and 1.1 mL of acryloyl chloride were added thereto and stirred at room temperature for 8 hours. The reaction mixture was then added to water, and the resultant precipitate was recrystallized from acetonitrile, to obtain 1.8 g of *N*-ethyl-*N*-(4-acryloyloxybutyl)-aminobenzoic acid.

0.30 g of *N*-ethyl-*N*-(4-acryloyloxybutyl)-aminobenzoic acid thus obtained, 0.36 g of the synthesized 4-acryloyloxybutyl 1,2-dihydro-7-hydroxynaphthalene-3-carboxylate, 0.21 g of dicyclohexylcarbodiimide and 0.13 g of diisopropylethylamine were dissolved in 10 mL of DMF and stirred for 8 hours. The resultant reaction mixture was extracted with ethyl acetate after the addition of water, and the extract solution was dried with sodium sulfate and concentrated under a reduced pressure. The residue was purified by silica gel chromatography using an eluate of chloroform and ethyl acetate (chloroform/ethyl acetate = 7/3), to obtain 0.2 g of Compound 9. The MS spectrum of the synthesized Compound 9 was measured: Fab MASS (M+H)⁺ = 590.

### Example 10

Compound 10 was synthesized in the same manner as in Example 9 except for using methyl 4-mercaptobenzoate in place of methyl 4-ethylaminobenzoate. The MS spectrum of the synthesized Compound 10 was measured: Fab MASS (M+H)⁺ = 579.

### Example 11

5.2 g of 1,2-dihydro-3-(4-cyanophenyl)-7-methoxynaphthalene synthesized according to a method disclosed in JP 59-163358 A was added to 50 mL of ethylene glycol monomethyl ether, and 25 mL of a 2N-sodium hydroxide aqueous solution was further added thereto and stirred under reflux for 12 hours. The resultant reaction mixture was then washed with ethyl acetate after the addition of water, hydrochloric acid was added thereto, and the resultant precipitate was isolated to obtain 2.6 g of 1,2-dihydro-3-(4-carboxyphenyl)-7-methoxynaphthalene.

2.6 g of 1 ,2-dihydro-3-(4-carboxyphenyl)-7-methoxynaphthalene thus obtained was dispersed in 50 mL of toluene, and 3 mL of methanol and 0.2 g of *p*-toluenesulfonic acid were added thereto. The resultant reaction mixture was heated and stirred under reflux for 8 hours while removing water generated in the reaction by Dean-Stark. The reaction mixture was washed with water and concentrated under a reduced pressure. The residue was recrystallized from acetonitrile to obtain 2.1 g of 1,2-dihydro-3-(4-methoxycarbonylphenyl)-7-methoxynaphthalene.

2.1 g of 1,2-dihydro-3-(4-methoxycarbonylphenyl)-7-methoxynaphthalene thus obtained was added to 30 mL of dichloromethane, and 30 mL of a boron tribromide dichloromethane solution (1.68 M) was added thereto. The resultant reaction mixture was stirred at room temperature for 2 hours and poured into cold water, and the resultant precipitate was isolated by suction filtration to obtain 1.5 g of 1,2-dihydro-3-(4-carboxyphenyl)-7-hydroxynaphthalene.

1.5 g of 1,2-dihydro-3-(4-carboxyphenyl)-7-hydroxynaphthalene thus obtained was dispersed in 50 mL of toluene, and 3 mL of methanol and 0.2 g of *p*-toluenesulfonic acid were added thereto. The resultant reaction mixture was heated and stirred under reflux for 8 hours while removing water generated in the reaction by Dean-Stark. The reaction mixture was washed with water and concentrated under a reduced pressure. The residue was recrystallized from acetonitrile to obtain 1.2 g of 1,2-dihydro-3-(4-methoxycarbonylphenyl)-7-hydroxynaphthalene.

0.52 g of 1,2-dihydro-3-(4-methoxycarbonylphenyl)-7 hydroxynaphthalene thus obtained was dissolved in 10 mL of DMF, and 0.48 g of acetyloxybutyl chloride, 0.7 g of potassium carbonate and 0.04 g of sodium iodide were added thereto. The resultant reaction mixture was heated to 100°C and stirred for 8 hours. The stirred reaction mixture was extracted with ethyl acetate after the addition of water, and the extract solution was dried with sodium sulfate and concentrated under a reduced pressure. The residue was purified by silica gel chromatography using an eluate of ethyl acetate and hexane (ethyl acetate/hexane = 2/8), to obtain 0.6 g of 1,2-dihydro-3-(4-methoxycarbonylphenyl)-7-(4-acetyloxybutyloxy)naphthalene.

0.6 g of 1,2-dihydro-3-(4-methoxycarbonylphenyl)-7-(4-acetyloxybutyloxy)naphthalene thus obtained was dissolved in methanol, and a 1N sodium hydroxide aqueous solution was added thereto and stirred at 60°C for 5 hours. The stirred reaction mixture was washed with ethyl acetate after the addition of water, and hydrochloric acid was added thereto until it was rendered acidic, to obtain 0.34 g of 1,2-dihydro-3-(4-carboxyphenyl)-7-(4-hydroxybutyloxy)naphthalene.

0.34 g of 1,2-dihydro-3-(4-carboxyphenyl)-7-(4-hydroxybutyloxy)naphthalene thus obtained was dissolved in 20 mL of THF, and 0.16 g of *N,N*-dimethylaniline and 0.25 mL of acryloyl chloride was added thereto and stirred at room temperature for 2 days. The resultant reaction mixture was added to water and extracted with ethyl acetate, and the extract solution was dried with sodium sulfate and concentrated under a reduced pressure. The resultant solid was washed with hexane to obtain 0.32 g of 1,2-dihydro-3-(4-carboxyphenyl)-7-(4-acryloyloxybutyloxy)naphthalene.

0.3 g of 1,2-dihydro-3-(4-carboxyphenyl)-7-(4-acryloyloxybutyloxy)naphthalene thus-obtained, 0.1 g of 2-hydroxyethyl acrylate, 0.2 g of dicyclohexylcarbodiimide, 0.1 g of triethylamine and 0.05 g of dimethylaminopyridine were dissolved in 10 mL of DMF and stirred at room temperature for 8 hours. The resultant reaction mixture was extracted with ethyl acetate after the addition of water, and the extract solution was dried with sodium sulfate and concentrated under a reduced pressure. The residue was purified by silica gel chromatography using an eluate of chloroform and ethyl acetate (chloroform/ethyl acetate = 7/3), to obtain 0.1 g of Compound 11. The MS spectrum of the synthesized Compound 11 was measured: Fab MASS (M+H)⁺ = 491.

### Example 12

Compound 12 was synthesized in the same manner as in Example 11 except for using acetyloxyethyl chloride in place of acetyloxybutyl chloride, and using 4-hydroxybutyl acrylate in place of 2-hydroxyethyl acrylate. The MS spectrum of the synthesized Compound 12 was measured: Fab MASS (M+H)⁺ = 491.

### Example 13

Compound 13 was synthesized in the same manner as in Example 11 except for using acetyloxyhexyl chloride in place of acetyloxybutyl chloride, and using 6-hydroxyhexyl acrylate in place of 2-hydroxyethyl acrylate. The MS spectrum of the synthesized Compound 13 was measured: Fab MASS (M+H)⁺ = 575.

### Example 14

Compound 14 was synthesized in the same manner as in Example 1 except for using methacryloyl chloride in place of acryloyl chloride and using 10-methacryloyloxydecyl 4-hydroxybiphenyl-4'-carboxylate in place of 2-acryloyloxyethyl 4-hydroxybiphenyl-4'-carboxylate. The MS spectrum of the synthesized Compound 14 was measured: Fab MASS (M+H)⁺ = 751.

### Example 15

Compound 15 was synthesized in the same manner as in Example 11 except for using methacryloyl chloride in place of acryloyl chloride, and using 2-hydroxyethyl methacrylate in place of 2-hydroxyethyl acrylate. The MS spectrum of the synthesized Compound 15 was measured: Fab MASS (M+H)⁺ = 519.

### Example 16

1.3 g of mesyl chloride was dissolved in 5 mL of THF, and a mixture of 2.8 g of 3-methyl-4-(4-acryloyloxybutyloxy)-benzoic acid, 1.3 g of diisopropylethylamine and 5 mL of THF was added thereto dropwise and stirred for 1 hour while cooling with ice. A mixture of 3.2 g of 4-acryloyloxybutyl 1,2-dihydro-7-hydroxynaphthalene-3-carboxylate prepared in the same manner as in Example 9, 1.3 g of diisopropylethylamine, and 5 mL of THF was added to the resultant reaction mixture, and stirred at room temperature for 8 hours. The reaction mixture was extracted with ethyl acetate after the addition of water, and the extract solution was dried with sodium sulfate and concentrated under a reduced pressure. The residue was purified by silica gel chromatography using an eluate of dichloromethane and ethyl acetate (dichloromethane/ethyl acetate = 90/10), to obtain 3.4 g of Compound 16. The MS spectrum of the synthesized Compound 16 was measured: Fab MASS (M+H)⁺ = 577.

### Example 17

Compound 17 was synthesized in the same manner as in Example 16 except for using 3-methoxy-4-(4-acryloyloxybutyloxy)-benzoic acid in place of 3-methyl-4-(4-acryloyloxybutyloxy)-benzoic acid. The MS spectrum of the synthesized Compound 17 was measured: Fab MASS (M+H)⁺= 593.

### Example 18

Compound 18 was synthesized in the same manner as in Example 16 except for using 3-chloro-4-(4-acryloyloxybutyloxy)-benzoic acid in place of 3-methyl-4-(4-acryloyloxybutyloxy)-benzoic acid. The MS spectrum of the synthesized Compound 18 was measured: Fab MASS (M+H)⁺= 597.

### Example 19

A glass substrate coated with a polyimide orientation film SE-150 available from Nissan Chemical Industries, Ltd. was subjected to a rubbing treatment, and a liquid crystal composition having the composition ratio shown in Table 1 below was applied thereto by a spin coating method under conditions of 1000 rpm and 20 seconds. The liquid crystal composition on the substrate was dried and heated successively to achieve liquid crystal orientation, and irradiated with ultraviolet light to produce an optical retardation film having a thickness of 1.2 µm. Th resultant cross-linked film exhibited refractive index anisotropy Δn of 0.29 (633 nm), which was measured by ellipsometry. Further, a cross-linked film using 1,4-phenylene bis(4-[6-(acryloyloxy)hexyloxy]benzoate) described in Die Angew. Macromol. Chem., Vol. 183, Page 45 (1990) was produced as a conventional optical retardation film. The conventional cross-linked film exhibited refractive index anisotropy Δn of 0.14. Thus, the optical retardation film according to the present invention had higher refractive index anisotropy than that of the conventional optical retardation film.

**Table 1. Formulation of Liquid Crystal Composition**

| Component | Amount |
|---|---|
| Compound 1 | 20.0% by mass |
| Cellulose Acetate Butyrate | 0.02% by mass |
| Photoinitiator (Irgacure 651 available from Ciba-Geigy Japan Ltd.) | 0.2% by mass |
| Sensitizer | 0.06% by mass |
| THF | 79.72% by mass |

### Example 20

A liquid crystal composition having the composition ratio shown in Table 2 below was applied to a glass substrate by a spin coating method under conditions of 1000 rpm and 20 seconds. The liquid crystal composition on the substrate was dried and heated successively to achieve liquid crystal orientation under corona poling with a tungsten needle electrode and a direct current voltage of 5kV, and irradiated with ultraviolet light to produce a cross-linked film (nonlinear optical device) having a thickness of 0.5 µm. By irradiating the resultant nonlinear optical device with infrared radiation of a YHG laser having a wavelength of 1.06 µm, second harmonic generation was observed. The second harmonic from the nonlinear optical device maintained its intensity for 6 months.

**Table 2. Formulation of Liquid Crystal Composition**

| Component | Amount |
|---|---|
| Compound 4 | 10.0% by mass |
| Photoinitiator (Irgacure 651 available from Ciba-Geigy Japan Ltd.) | 0.20% by mass |
| Sensitizer | 0.06% by mass |
| THF | 89.74% by mass |

### Example 21

The liquid crystal composition having the composition ratio shown in Table 2 was applied to an ITO glass substrate by a spin coating method under conditions of 1000 rpm and 20 seconds. The liquid crystal composition on the substrate was dried and heated successively to achieve liquid crystal orientation under corona poling with a tungsten needle electrode and a direct current voltage of 5 kV, and irradiated with ultraviolet light to produce a cross-linked film having a thickness of 0.5 µm. Aluminum was then deposited on the cross-linked film to obtain an electro-optical device. The electro-optic effect of the resultant electro-optical device was confirmed by a method described in Appl. Phys. Lett., Vol. 56, Page 1734 (1990).

As described in detail above, the polymerizable liquid crystal compound of the present invention is excellent as a photoelectric functional material, and the liquid crystal polymer prepared therefrom can be suitably used for the optical retardation film, the optically anisotropic element, the nonlinear optical device and the electro-optical device.

## Claims

1. A polymerizable liquid crystal compound represented by the formula (I) 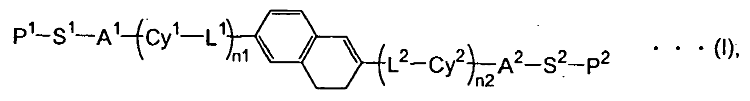 wherein P¹ and P² independently represent a polymerizable group; A¹, A², L¹ and L² independently represent a divalent linking group constituted by a single bond, an oxygen atom, a sulfur atom, a carbonyl group, a sulfonyl group, a substituted or unsubstituted imino group, or a combination thereof; S¹ and S² independently represent a divalent linking group; Cy¹ and Cy² independently represent a cyclic group having 5 to 14 carbon atoms; and each of n₁ and n₂ represents an integer, the sum of n₁ and n₂ being 0 to 2.

2. The polymerizable liquid crystal compound of claim 1, wherein n₁ is 0 and n₂ is 1 or 2.

3. The polymerizable liquid crystal compound of claim 1 or 2, wherein n₁ is 0 and n₂ is 2.

4. The polymerizable liquid crystal compound according to any one of claims 1 to 3, wherein said polymerizable liquid crystal compound is represented by the formula (II): 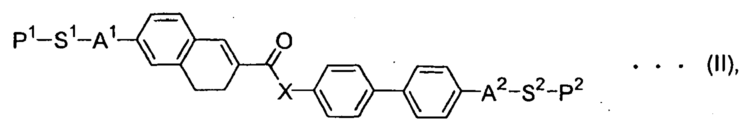 wherein P¹ and P² independently represent a polymerizable group; A¹ and A² independently represent a divalent linking group constituted by a single bond, an oxygen atom, a sulfur atom, a carbonyl group, a sulfonyl group, a substituted or unsubstituted imino group, or a combination thereof; S¹ and S² independently represent a divalent linking group; and X represents an oxygen atom, a sulfur atom, or a substituted or unsubstituted imino group.

5. The polymerizable liquid crystal compound according to any one of claims 1 to 4, wherein at least one of said P¹ and P² is an acryloyloxy group or a methacryloyloxy group.

6. The polymerizable liquid crystal compound according to any one of claims 1 to 5, wherein one of said A¹ and A² is an oxygen atom, a sulfur atom, or a substituted or unsubstituted imino group, and the other is a carbonyloxy group or a sulfonyloxy group.

7. A liquid crystal polymer prepared by polymerizing the polymerizable liquid crystal compound recited in any one of claims 1 to 6.

8. A liquid crystal composition comprising a solvent and at least one polymerizable liquid crystal compound recited in any one of claims 1 to 6.

9. An optical retardation film comprising at least a layer comprising a liquid crystal polymer recited in claim 7.

10. An optically anisotropic element comprising the liquid crystal polymer recited in claim 7.

11. A nonlinear optical device comprising the liquid crystal polymer recited in claim 7.

12. An electro-optical device comprising the liquid crystal polymer recited in claim 7.

## Patentansprüche

1. Polymerisierbare Flüssigkristallverbindung, wiedergegeben durch die Formel (1): 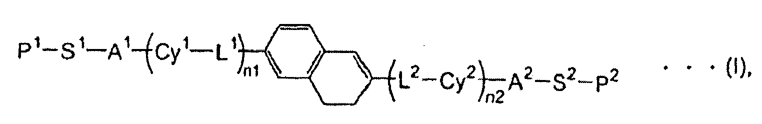 worin P¹ und P² unabhängig eine polymerisierbare Gruppe bedeuten, A¹, A², L¹ und L² unabhängig eine zweiwertige Verbindungsgruppe bedeuten, bestehend aus einer Einfachbindung, einem Sauerstoffatom, einem Schwefelatom, einer Carbonylgruppe, einer Sulfonylgruppe, einer substituierten oder unsubstituierten Iminogruppe oder einer Kombination davon, S¹ und S² unabhängig eine zweiwertige Verbindungsgruppe bedeuten, Cy¹ und Cy² unabhängig eine cyclische Gruppe mit 5 bis 14 Kohlenstoffatomen bedeuten, und jedes von n₁ und n₂ eine ganze Zahl bedeutet, wobei die Summe von n₁ und n₂ 0 bis 2 ist.

2. Polymerisierbare Flüssigkristallverbindung nach Anspruch 1, worin n₁ 0 ist, und n₂ 1 oder 2 ist.

3. Polymerisierbare Flüssigkristallverbindung nach Anspruch 1 oder 2, worin n¹ 0 ist, und n² 2 ist.

4. Polymerisierbare Flüssigkristallverbindung gemäß einem der Ansprüche 1 bis 3, worin die polymerisierbare Flüssigkristallverbindung durch die Formel (II) wiedergegeben wird: 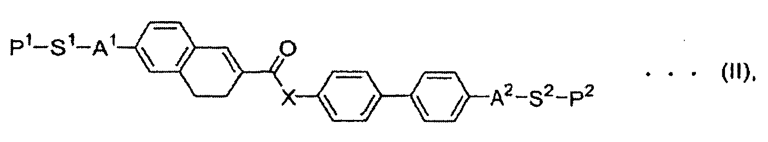 worin P¹ und P² unabhängig eine polymerisierbare Gruppe bedeuten, A¹ und A² unabhängig eine zweiwertige Verbindungsgruppe bedeuten, bestehend aus einer Einfachbindung, einem Sauerstoffatom, einem Schwefelatom, einer Carbonylgruppe, einer Sulfonylgruppe, einer substituierten oder unsubstituierten Iminogruppe oder einer Kombination davon, S¹ und S² unabhängig eine zweiwertige Verbindungsgruppe bedeuten, und X ein Sauerstoffatom, ein Schwefelatom oder eine substituierte oder unsubstituierte Iminogruppe bedeutet.

5. Polymerisierbare Flüssigkristallverbindung gemäß einem der Ansprüche 1 bis 4, worin wenigstens eine von P¹ und P² eine Acryloyloxygruppe oder eine Methacryloyloxygruppe ist.

6. Polymerisierbare Flüssigkristallverbindung gemäß einem der Ansprüche 1 bis 5, worin eine von A¹ und A² ein Sauerstoffatom, ein Schwefelatom oder eine substituierte oder unsubstituierte Iminogruppe ist, und die andere eine Carbonyloxygruppe oder eine Sulfonyloxygruppe ist.

7. Flüssigkristallpolymer, hergestellt durch Polymerisieren der in einem der Ansprüche 1 bis 6 genannten polymerisierbaren Flüssigkristallverbindung.

8. Flüssigkristallzusammensetzung, umfassend ein Lösemittel und wenigstens eine polymerisierbare Flüssigkristallverbindung, die in einem der Ansprüche 1 bis 6 genannt ist.

9. Optischer Retardationsfilm, umfassend wenigstens eine Schicht, umfassend ein in Anspruch 7 genanntes Flüssigkristallpolymer.

10. Optisch anisotropes Element, umfassend das in Anspruch 7 genannte Flüssigkristallpolymer.

11. Nichtlineare optische Vorrichtung, umfassend das in Anspruch 7 genannte Flüssigkristallpolymer.

12. Elektrooptische Vorrichtung, umfassend das in Anspruch 7 genannte Flüssigkristallpolymer.

## Revendications

1. Composé cristal liquide polymérisable représenté par la formule (I) : 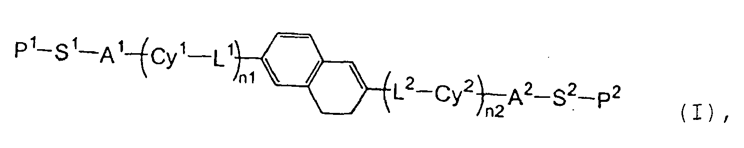 dans laquelle P¹ et P² représentent indépendamment un groupe polymérisable ; A¹, A² ,L¹ et L² indépendamment représentent un groupe de liaison divalent constitué par une liaison simple, un atome d'oxygène, un atome de soufre, un groupe carbonyle, un groupe sulfonyle, un groupe imino substitué ou non substitué, ou une combinaison de ceux-ci ; s¹ et S² indépendamment représentent un groupe de liaison divalent ; Cy¹ et Cy² indépendamment représentent un groupe cyclique ayant de 5 à 14 atomes de carbone ; et chacun de n₁ et n₂ représente un entier, la somme de n₁ et n₂ étant 0 à 2.

2. Composé cristal liquide polymérisable de la revendication 1, dans lequel n₁ est 0 et n₂ est 1 ou 2.

3. Composé cristal liquide polymérisable de la revendication 1 ou 2, dans lequel n₁ est 0 et n₂ est 2.

4. Composé cristal liquide polymérisable selon l'une quelconque des revendications 1 à 3, lequel composé cristal liquide polymérisable est représenté par la formule (II) : 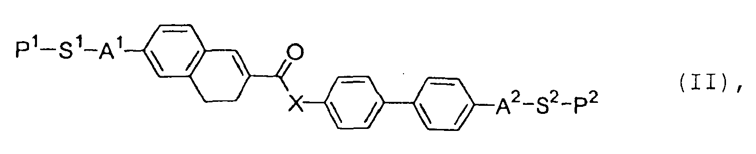 dans laquelle P¹ et P² représentent indépendamment un groupe polymérisable ; A¹ et A² indépendamment représentent un groupe de liaison divalent constitué par une liaison simple, un atome d'oxygène, un atome de soufre, un groupe carbonyle, un groupe sulfonyle, un groupe imino substitué ou non substitué, ou une combinaison de ceux-ci ; S¹ et S² indépendamment représentent un groupe de liaison divalent ; et X représente un atome d'oxygène, un atome de soufre, ou un groupe imino substitué ou non substitué.

5. Composé cristal liquide polymérisable selon l'une quelconque des revendications 1 à 4, dans lequel au moins l'un desdits P¹ et P² est un groupe acryloyloxy ou un groupe méthacryloyloxy.

6. Composé cristal liquide polymérisable selon l'une quelconque des revendications 1 à 5, dans lequel l'un desdits A¹ et A ² est un atome d'oxygène, un atome de soufre, ou un groupe imino substitué ou non substitué, et l'autre est un groupe carbonyloxy ou un groupe sulfonyloxy.

7. Polymère cristal liquide préparé en polymérisant le composé cristal liquide polymérisable cité dans l'une quelconque des revendications 1 à 6.

8. Composition de cristal(aux) liquide(s) comprenant un solvant et au moins un composé cristal liquide polymérisable cité dans l'une quelconque des revendications 1 à 6.

9. Film à retard optique comprenant au moins une couche comprenant un polymère cristal liquide cité dans la revendication 7.

10. Elément optiquement anisotrope comprenant le polymère cristal liquide cité dans la revendication 7.

11. Dispositif optique non linéaire comprenant le polymère cristal liquide cité dans la revendication 7.

12. Dispositif électro-optique comprenant le polymère cristal liquide cité dans la revendication 7.
